# EUROPEAN PATENT APPLICATION

(11) **EP 2 340 708 A1**
(43) Date of publication of application: **06.07.2011**
(21) Application number: 10197103.4
(22) Date of filing: 28.12.2010
(51) Int. Cl.: A01K 45/00

(54) **Poultry gathering and loading device**

(30) Priority: 30.12.2009 IT MI20092330
(71) Applicant: Ciemmecalabria S.r.L., 25046 Cazzago San Martino (BS) (IT)
(72) Inventor: Calabria, Paolo, 25036, PALAZZOLO S/O BS (IT); Calabria, Eugenio, 25049, PILZONE D'ISEO BS (IT)
(74) Representative: Colombo, Stefano Paolo

(57) **Abstract**

A vehicle is described for gathering fowl from the ground and carrying them to a place of unloading, for example a cage. The vehicle comprises: a main frame (2); wheels (31,32) or tracks to support the main frame above the ground; an accumulating conveyor belt (62) to carry the fowl in a first direction (B) (which can be, substantially, the direction of the length of the vehicle); and an unloading conveyor belt (63) that receives the fowl from the accumulating conveyor belt and carries the fowl received towards a place of unloading. The unloading conveyor belt carries the fowl in a second direction. The second direction may be at an angle with the first direction. The vehicle also comprises a belt-supporting structure (21) to support the accumulating conveyor belt and the unloading conveyor belt. The vehicle comprises a counterframe (23). The belt-supporting structure is at least partially raisable respect to the counterframe. The vehicle comprises a weighing device (91,92) placed between the main frame and the counterframe for weighing the fowl carried on the conveyor belts.

## Description

The present invention relates to a vehicle for gathering fowl (for example, chickens or similar animals) from the ground and placing them in a cage.

It is well known that the majority of fowl farmed for meat are currently raised in sheds or similar constructions. In sheds, thousands of fowl are raised applying highly advanced farming methods. This kind of intensive farming allows considerable scale economies for farmers, which translate into money savings for the consumers who buy the meat of animals raised with these methods. Furthermore, this kind of intensive farming determines a substantial uniformity of the livestock. After a preset period of time the breed fowl reach the desired weight and are ready for slaughtering.

At the end of the growing period, the live animals must be collected (without harming them) from the shed where they were raised and taken to the next treatment stages, typically slaughtering.

Also, it is sometimes necessary to collect the fowl from a shed and take them to another shed. This occurs, for example, when chicks must be taken from the hatchery to another location where they will be raised.

Thus the necessity arises to collect all the animals in the farm shed in a relatively short time. The animals collected are typically put inside cages. However, the animals collected may also not be caged but taken to another farm shed or put inside another type of container or on a conveyor belt.

Once caged, the animals can be easily carried on a lorry or other similar means of transport. The problem, as mentioned above, is that farm sheds contain several thousands of fowl, for example thousands of chickens, that must be picked up without being damaged.

Gathering (and caging) operations are typically carried out using particular machines, commonly known as "fowl harvesters". In the specific case of chickens, the machines are called "chicken harvesters".

One type of equipment for gathering fowl and placing them in coops or similar enclosures is known, for example, from Italian patent Italian no. IT1303293 granted to Ciemme di Calabria f.lli S.n.c The known equipment is very efficient and allows to collect a very large number of animals per unit of time.

However, in certain working conditions using that machine is not entirely practical. In particular, using said known equipment is inconvenient in farm sheds that are relatively small and/or in which the supporting posts are close to each other and/or the entrance is too small. Another situation in which using said known equipment is unpractical is when the shed is arranged on more than one floor. Working on the upper floors requires using machines that are lightweight and have limited height and overall dimensions.

Patent no. EP0713642 describes a system for loading fowl into containers. The patent also describes a separate capturing vehicle that, moving independently from the system, can capture live fowl and take them to the receiving location. The capturing vehicle according to patent no. EP0713642 includes a tractor and two conveyor sets on the sides of the tractor. Each conveyor set includes an inclined conveyor and an accumulating conveyor.

Patent application no. IT2007A000331 describes a fowl-gathering vehicle that comprises: a frame; wheels or tracks to support the frame above the ground; a gathering conveyor belt to collect the fowl from the ground and an accumulating conveyor belt that receives the fowl from the gathering conveyor belt and that runs in the same direction of the gathering conveyor belt, wherein the speed of the gathering conveyor belt, when picking up the fowl, is greater than the speed of the accumulating conveyor belt.

The vehicle of patent application no. IT2007A000331 is very efficient, can be used inside small areas and has a high chicken-loading capacity.

However, the present inventors felt that it would be necessary to provide a vehicle which, in addition to the advantageous features of the vehicle known from patent application no. IT2007A000331, could also allow to cage the fowl gathered directly from the vehicle itself without having to transfer them to other separate equipment.

According to one aspect of this invention a vehicle is described which gathers fowl from the ground and carries them to a place of unloading, for example a cage. The vehicle comprises: a main frame; wheels or tracks to support the main frame above the ground; an accumulating conveyor belt to carry the fowl in a first direction (which can be, essentially, the longitudinal direction of the vehicle); and an unloading conveyor belt that receives the fowl from the accumulating conveyor belt and carries the fowl received towards a place of unloading. The unloading conveyor belt carries the fowl in a second direction. The second direction may be at an angle with respect to the first direction. The vehicle also comprises a belt-supporting structure to support the accumulating conveyor belt and the unloading conveyor belt. Advantageously, the vehicle may also comprise a counterframe. The belt-supporting structure is at least partially raisable respect to the counterframe. The vehicle may also advantageously comprise a weighing device placed between the main frame and the counterframe for weighing the fowl carried on the conveyor belts.

Advantageously, the weighing device comprises load cells. In one embodiment, the weighing device comprises two front load cells and two rear load cells placed symmetrically to a centre line of the vehicle.

In one embodiment, the main frame comprises crossbars, each of which crossbars comprises an end fastening block on which to fasten the load cells.

According to a preferred embodiment, the belt-supporting structure is pivotally hinged to the counterframe at a front part of the vehicle.

Preferably, the vehicle also comprises a lifting device for raising the belt-supporting structure respect to the counterframe at its rear part.

The counterframe may comprise two longitudinal crossbars and the belt-supporting structure may be pivotally hinged to the longitudinal crossbars at a front part of them.

Preferably, the vehicle comprises a barrier between said accumulating conveyor belt and said unloading conveyor belt.

Preferably, the vehicle comprises a further barrier in an intermediate position of said accumulating conveyor belt. Said further barrier may be operated manually or by weight data referring to the weight of the fowl accumulated on said second conveyor belt, upstream of said further barrier.

The unloading conveyor belt is preferably operated to unload fowl towards the right side and/or left side of the vehicle.

Preferably, the vehicle also comprises a gathering conveyor belt to collect the fowl from the ground and carry them to the accumulating conveyor belt.

In one embodiment, the second direction is substantially perpendicular to the first direction.

In one embodiment, the vehicle also comprises a wheel lifting device to raise said wheels or said tracks respect to the main frame.

In one embodiment, the vehicle also comprises a driving arrangement fixed to said belt-supporting structure and raisable with it. Between the driving arrangement and the accumulating conveyor belt sufficient space is provided for the fowl to pass.

In the present description and in the claims, the term "speed" referred to a conveyor belt (for example the pick-up conveyor belt or the accumulating conveyor belt) shall be understood to mean the length (for example in metres [m]) of conveyor belt that, in fully operational conditions, travels by during a predetermined unit of time (for example one minute [min]). Therefore, a speed of 20 m/min means that in one minute, in fully operational conditions, a length of twenty metres of belt travels by a fixed point. The present inventors have carried out speed measurements using a digital tachometer manufactured by Borletti, model "Digital Tachometer t20". This device, or a similar one, can be used to measure the speed of conveyor belts.

The following is a detailed description of the invention, provided by way of a non-limiting example, to be read with reference to the attached drawings, in which:
- Figure 1 is a schematic axonometric view of the vehicle according to an embodiment of the invention in the gathering configuration;
- Figures 1.1 and 1.2 are details of Figure 1;
- Figure 2 is a schematic side view of the vehicle of Figure 1 in the gathering configuration;

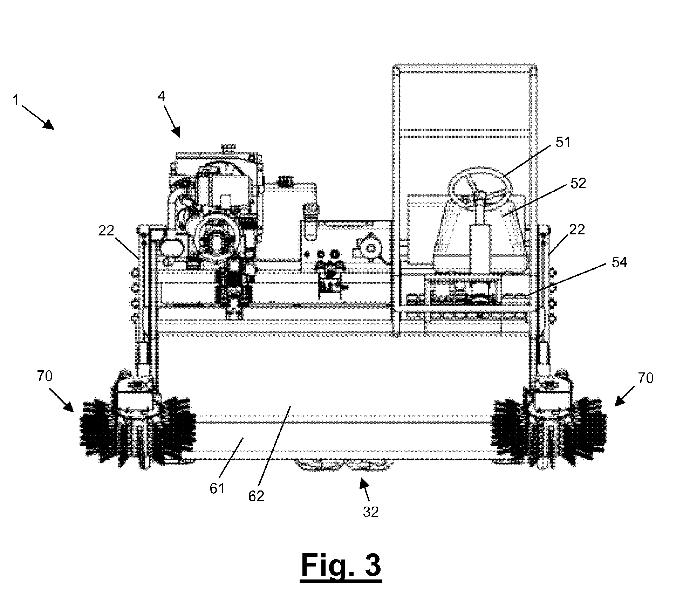

- Figure 3 is a schematic front view of the vehicle of Figure 1 in the gathering configuration;
- Figure 4 is a schematic axonometric view of the vehicle of Figure 1 in the travelling configuration;
- Figure 5 is a schematic side view of the vehicle of Figure 1 in the travelling configuration;

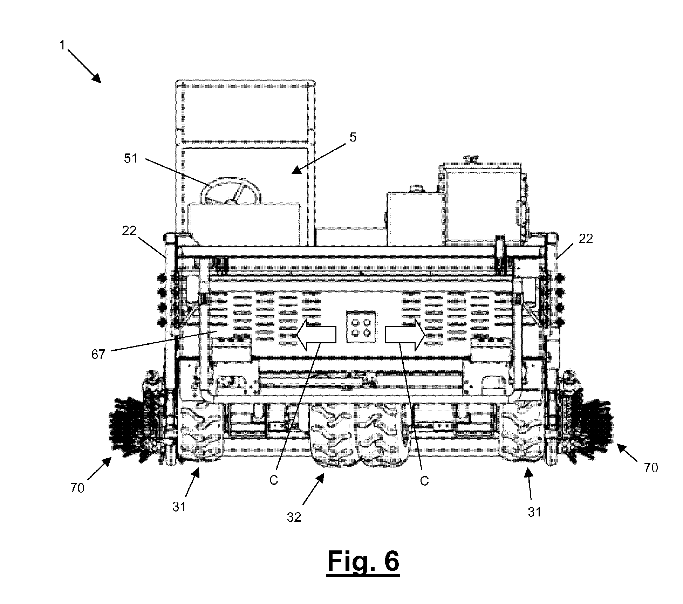

- Figure 6 is a schematic rear view of the vehicle of Figure 1 in the gathering configuration;
- Figure 7 is a schematic view of the unloading conveyor belt and of the device that allows unloading from the right side and from the left side;
- Figure 8 is a schematic axonometric view of the vehicle of Figure 1 in the caging configuration, lowered, right side;
- Figure 9 is a schematic axonometric view of the vehicle of Figure 1 in the caging configuration at an intermediate height, right side;
- Figure 10 is a schematic axonometric view of the vehicle of Figure 1 in the caging configuration, raised, right side;
- Figure 11 is a schematic side view of the vehicle of Figure 1 in the caging configuration raised, right side;
- Figure 12 is a schematic rear view of the vehicle of Figure 1 in the caging configuration at an intermediate height, right side;
- Figure 13 is a schematic rear view of the vehicle of Figure 1 in the caging configuration raised, right side;
- Figure 14 is a schematic exploded view of part of the frame and counterframe of the vehicle of Figure 1;
- Figure 15 is a schematic side view of the vehicle of Figure 1 in the travelling configuration with the frame raised; and
- Figure 16 is a schematic front view of the vehicle of Figure 1 in the travelling configuration with the frame raised.

By convention, the right side of the vehicle is the right side when the vehicle is viewed from the front.

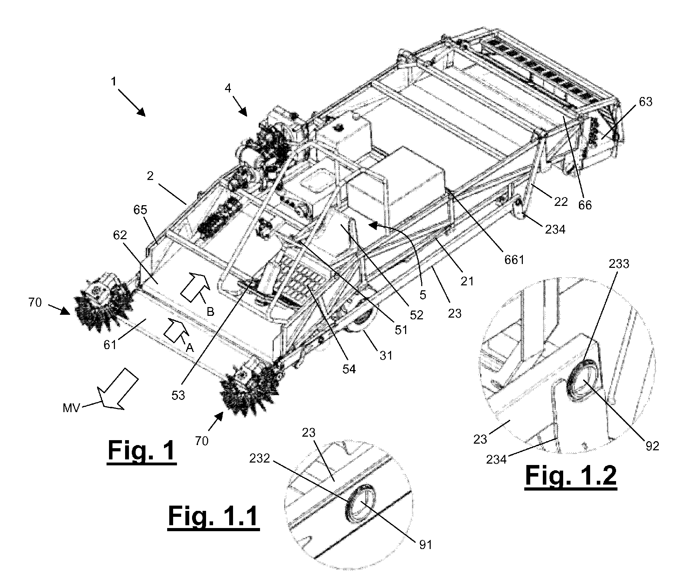

Reference is initially made to Figure 1, which shows an embodiment of the vehicle relating to the present invention. Reference number 1 refers to the vehicle in its entirety. By way of a non-limiting example, the fowl that can be gathered by the vehicle 1 are chickens.

The vehicle 1 comprises a main frame 2. To the main frame 2 are pivotally attached front wheels 31 and rear wheels 32. Advantageously, the front and rear wheels are operated by corresponding hydraulic drive motors (not shown). The hydraulic drive motors are connected to a pressurized-oil power supply with a pump controlled by an internal-combustion engine 4, for example an engine which is petrol or diesel fueled. In the embodiment shown, the vehicle 1 is fitted with two front wheels 31, distanced from one another, and two directly coupled rear wheels 32. In alternative to the wheels 31, 32 the vehicle can be fitted with crawler tracks. The motor 4 is preferably housed and sheltered in a protective, box-shaped casing (not shown) to prevent the operator and/or the fowl collected from accidentally coming into contact with parts of the motor 4.

Alternatively, the vehicle 1 may not be equipped with its own motor and be hitched to another motor vehicle, such as a tractor or similar vehicle (not shown).

Preferably, there is a driving arrangement 5 comprising a steering device 51 to direct the vehicle 1 in the direction chosen by the operator. The embodiment shown includes a seat 52 with a steering wheel 51 and other driving controls 53 operated by pedal and/or by hand. These controls 53 are not relevant for the purposes of the present invention and shall therefore not be described further. The driving arrangement 5, on the other hand, shall be better described below.

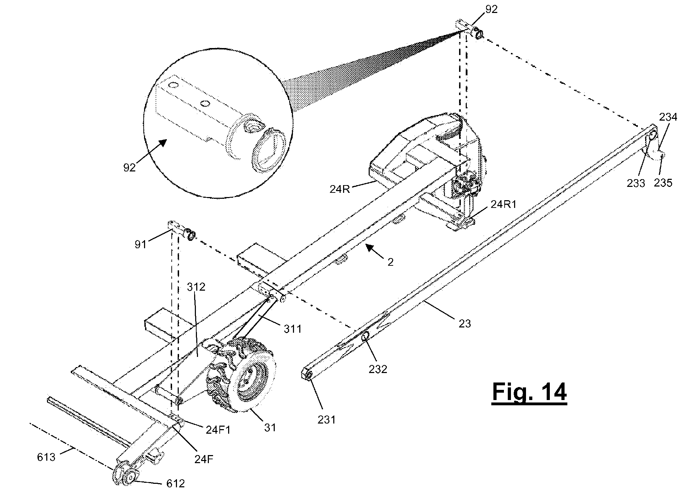

With reference to Figure 14, the vehicle 1 also comprises a counterframe 23 supported by the main frame 2. The main frame 2 and counterframe 23 shall be described in more detail below.

The vehicle 1 also comprises a conveyor belt assembly 6 and a conveyor belt-supporting structure 21. The conveyor belt assembly 6 preferably comprises three conveyor belts, a first pick-up conveyor belt 61, a second accumulating conveyor belt 62 and a third unloading conveyor belt 63. Preferably, the sides of the second conveyor belt 62 are provided with sideboards 65 forming a channel and preventing the animals collected from falling off the sides.

The first conveyor belt 61 and the second conveyor belt 62 are aligned. The gathering conveyor belt 61 is hinged to the main frame 2 in the front part of the main frame 2. Figure 14 shows in outline a hydraulic motor 612 configured to turn a roller (not shown) around an axis 613 and consequently actuate the rotation of the first conveyor belt 61.

The accumulating conveyor belt 62 and the unloading conveyor belt 63 are supported by the belt-supporting structure 21. Said belt-supporting structure 21 is hinged to the counterframe 23 and rotates around an axis that passes through the centres of two holes 231 in the front part of the counterframe 23 (Figure 14). Figure 14 shows only the right part of the counterframe 23 but it is clear that the counterframe 23 is symmetric to the vehicle's centre line.

The counterframe may consist of a single piece with two transverse members and two longitudinal members connected so to form a rectangular structure. Alternatively, as shown in Figure 14, the counterframe comprises two longitudinal members 23 (only the right-hand side longitudinal member is shown in Figure 14) essentially fastened to the ends of a front crossbar 24F and a rear crossbar 24R of the main frame 2.

The pick-up conveyor belt 61 is located at the head of the vehicle 1 and, at least in the pick-up configuration, can be inclined down towards the ground. The accumulating conveyor belt 62 is located downstream from the pick-up conveyor belt 61. The term "downstream" refers to the vehicle 1 in the pick-up configuration.

The pick-up conveyor belt 61 is preferably a belt made of plastic or similar material wrapped in a closed loop around at least one shaft (drive roller) and one idle roller. Similarly, the accumulating conveyor belt 62 is wrapped in a closed loop around a drive roller and an idle roller. Preferably, intermediate idle rollers or transmission devices are placed between the drive roller and the idle roller around which the accumulating conveyor belt is wrapped, to ensure that the conveyor belt follows a predetermined path.

Preferably, the vehicle 1 comprises three hydraulic motors connected to the oil circuit, each one separately driving each conveyor belt 61, 62 and 63.

According to an embodiment of the present invention, in the gathering phase, the speed of the pick-up conveyor belt 61 is greater than the speed of the accumulating conveyor belt 62. Preferably, the speed of the pick-up conveyor belt 61 in the fowl gathering phase is at least twice the speed of the accumulating conveyor belt 62. More preferably, the speed of the pick-up conveyor belt 61 in the fowl gathering phase is at least three times the speed of the accumulating conveyor belt 62. Even more preferably, the speed of the pick-up conveyor belt 61 in the fowl gathering phase is about four times the speed of the accumulating conveyor belt 62. The inventors believe that approximately 15 m/min is a convenient speed for the gathering conveyor belt 61 and that approximately 3 or 4 m/min is a convenient speed for the accumulating conveyor belt 62.

The unloading conveyor belt 63, configured to receive fowl from the accumulating conveyor belt 62 and direct the fowl towards cages or coops, as described below, is preferably located downstream from the accumulating conveyor belt 62. Preferably, the direction of movement of unloading conveyor belt 63 is perpendicular or essentially perpendicular to the direction of movement of the accumulating conveyor belt. Typically, the direction of movement of the accumulating conveyor belt 62 is essentially longitudinal to the main frame 2, while the direction of movement of the unloading conveyor belt 63 is at an angle with respect to the direction of the accumulating conveyor belt (for example, transversal), in order to unload the fowl from the sides.

In an embodiment of the present invention the unloading of the fowl is done from the right side of the vehicle 1. In another embodiment of the present invention the unloading of the fowl is done from the left side of the vehicle 1. In a particularly advantageous embodiment, the unloading of the fowl can be done from the right side and from the left side.

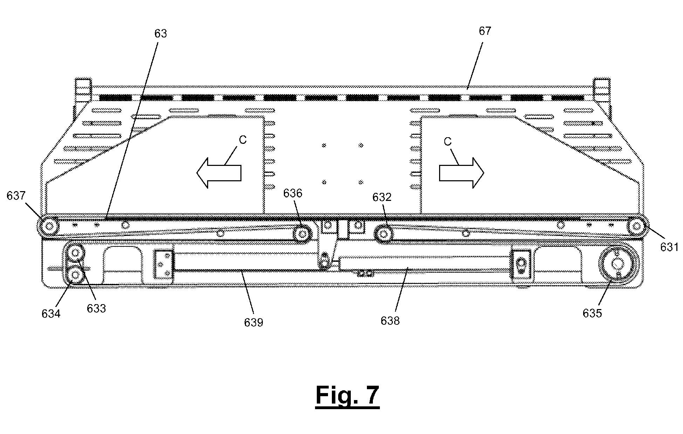

Preferably, the unloading conveyor belt 63 is extensible so that it can extend towards (and if necessary also inside) the cages at the time of unloading. Figure 7 shows the mechanism that allows the unloading conveyor belt 63 to extend towards cages placed on the right or left of the vehicle 1. The conveyor belt 63 is wrapped in an "S", both right and left, around rollers and/or fixed tubes 631-637, and forms loops. Thanks to hydraulic cylinders 638, 639 the upper level can be extended to the right and/or to the left. The rollers 631, 632, 633, 634, 635, 636, 637 that support the unloading conveyor belt 63 can turn clockwise or anticlockwise, depending on which side the operator wants to unload the fowl.

As anticipated above, the vehicle 1 comprises a driving arrangement 5 with a steering wheel 51 or handlebar for steering the vehicle 1 in the direction chosen by the operator, a seat 52 and other driving controls 53. The driving seat 5 is fastened to a plate 54 placed above the accumulating conveyor belt 61. Between the plate 54 and the surface of the accumulating conveyor belt 62 there is, preferably, a vertical distance (for example about 30 cm) high enough for the fowl to pass through. In this way, the entire width of the accumulating conveyor belt 62 can be used and the operator has complete visibility and control. This is very useful during both fowl loading and unloading operations.

A separating barrier 66 is preferably placed between the accumulating conveyor belt 62 and the unloading conveyor belt 63. Said barrier 66 prevents the animals picked-up from accessing the unloading conveyor belt 63. The barrier 66 is opened (by lifting or rotating) when the fowl have to pass from the accumulating conveyor belt 62 to the unloading conveyor belt 63. Advantageously, an intermediate barrier 661 can be placed at an intermediate distance from the accumulating belt. The intermediate barrier 661 is preferably left closed during the initial fowl gathering phase until the first part of the gathering belt (upstream of the intermediate barrier) is essentially filled with fowl. The intermediate barrier 661 is then opened so that the fowl accumulated can be passed onto the second section of the accumulating conveyor belt making room for new fowl on the front part of the accumulating conveyor belt. This solution is highly advantageous as it makes gathering more uniform and prevents the fowl from piling up at the end.

To facilitate collecting the fowl and sending them towards the pick-up conveyor belt 61, at least two rotating sweepers 70 can be envisaged, with tips made of rubber or a similar flexible material. In addition or alternatively to the sweepers 70 placed at the ends of the pick-up conveyor belt 61, an upper transverse sweeper can be applied above the front edge of the gathering conveyor belt.

According to an advantageous embodiment of this invention, the vehicle 1 comprises a fowl weighing system. The weighing system is particularly suited for weighing the fowl during the gathering phase and also during the unloading phase, as will be better explained below. The weighing system preferably comprises electronic load cells. The weighing system preferably comprises three or more load cells. Preferably, four load cells are envisaged, two front load cells 91 fastened to the end blocks 24F1 of the front crossbar 24F of the main frame and two rear load cells 92 fastened to the end blocks 24R1 of the rear crossbar 24R (Figure 14). Preferably, each block 24F1 and 24R1 comprises holes for fastening the body of its respective load cell 91, 92 by means of screws (not shown).

The load cells are connected to the counterframe 23. In particular, each longitudinal member 23 comprises a front hole 232 and a rear hole 233 configured, respectively, to receive one of the front load cells 91 and one of the rear load cells 92. Therefore, the counterframe 23 is connected to the main frame 2 through the load cells.

In addition to the front hole 231 mentioned above, each crossbar 23 comprises a rear bracket 234, preferably having a downward-curving shape. The rear bracket 234 is configured to support the piston rod of a respective hydraulic cylinder 22. The body of the hydraulic cylinder 22 is fastened to the belt-supporting structure. When the hydraulic cylinder 22 is not extended, the belt-supporting structure is in its lowest configuration. The hydraulic cylinder 22 can be extended to raise the rear part of the belt-supporting structure, which is hinged to the counterframe 23 at the front thereof. The vehicle 1 preferably comprises two hydraulic cylinders 22, one for each longitudinal crossbar 23. Each rear bracket 234 ends with a pair of holes 235 to receive a pivot pin for connecting the bracket 234 to the rod of the hydraulic cylinder 22.

This configuration in which the counterframe 23 is connected to the main frame 2 through the load cells 91, 92 and in which the belt-supporting structure is in turn connected to the counterframe is particularly advantageous. As a matter of fact, in this configuration the signals produced by each load cell do not depend on the inclination of the belt-supporting structure. An alternative configuration with the load cells connected directly to the main frame and to the belt-supporting structure would not be so advantageous because the signals produced by the load cells would be different depending on whether the belt-supporting structure is lowered or raised. In other words, the fowl weight measurement would be different with the hydraulic cylinders 22 extended or retracted. Having the counterframe placed between the load cells (fastened to the main frame 2) and the belt-supporting structure is particularly advantageous and allows to obtain very accurate measurements regardless of whether the belts are raised or of the inclination.

As mentioned above, the load cells 91, 92 are preferably configured to detect the weight of the belt-supporting structure 21. The weight of said structure, including the weight of conveyor belts 62, 63, of the driving arrangement 5 (and of the operator in the driver's seat) and of the motor 4 remains essentially unvaried during the vehicle's operation. Strictly speaking, the weight of the fuel that feeds the motor does change (if the fuel tank is supported by the belt-supporting structure 21), but this change in weight can be considered negligible. Therefore, the only substantial change in weight detected by the load cells is produced by the fowl carried on the conveyor belts 62 and/or 63.

The term "variable weight" means the weight of the fowl on the conveyor belts, in particular on conveyor belts 62 and 63. The term "fixed weight" refers essentially to the weight of the structure 21, including the weight of the conveyor belts 62, 63, of the driving arrangement 5, of the operator, of the motor 4 and if necessary of the fuel tank. The term "total weight" means the sum of the fixed weight and the variable weight. Accordingly, knowing the fixed weight (measured by the load cells before starting the fowl gathering operations), the weight of the fowl can be deduced as being the difference between the total weight and the fixed weight.

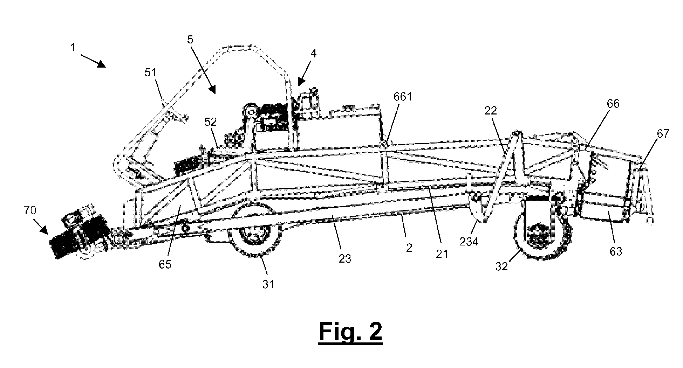

In an advantageous embodiment, the load cells 91, 92 transmit weight data referring to the weight of the loaded fowl to a displaying device and/or to a computer (not shown). The displaying device (for example a monitor or a display) and/or an acoustic device (not shown) provide information on the weight of the fowl loaded and/or unloaded. For example, if it was decided to gather and load fowl amounting to a certain weight (for example 400 kg), the load cells transmit, preferably in real time (that is, as the fowl are being loaded) the weight of the fowl on the accumulating conveyor belt 62 and/or on the unloading conveyor belt 63. Once the desired weight is reached, the operator is alerted (acoustically and/or visually) and can stop gathering. According to an embodiment, when the preset weight is reached the gathering conveyor belt 61 is automatically stopped and, if necessary, automatically raised to assume the travelling configuration, described hereunder with reference to Figure 2.

When the weight of the fowl on the first section of the accumulating conveyor belt (up to the intermediate barrier 661) reaches a certain value, the vehicle's operator can be alerted and/or the intermediate barrier 661 can be automatically raised in order to transfer the collected fowl to the second section of the accumulating conveyor belt 62, which is closed off by barrier 66. In practice, the accumulation preferably occurs in two phases or stages.

Thanks to this advantageous feature, the fowl are loaded according to a preset weight. Since the weight of industrially-bred fowl is often essentially the same, this advantageous feature allows loading the desired number of fowl, within a tolerance interval.

When the preset fowl weight is reached the accumulating conveyor belt 62 is stopped, to prevent the fowl from piling up against the closed barrier.

Preferably, when gathering is completed, the actual weight of the collected fowl is measured again. A software program then divides the total actual weight of the collected fowl by the total number of cages to be filled, in order to distribute the fowl inside the cages as evenly as possible. Once the first cage is full, the weight of the remaining fowl is divided by the number of remaining cages, to obtain the theoretical weight of the fowl to put in the second cage. Once the second cage is full, the weight of the remaining fowl is again divided by the number of remaining cages to obtain the weight of the fowl to put in the next cage. The procedure is repeated iteratively until all the cages are essentially evenly filled.

According to an embodiment of this invention, a rear board 67 is envisaged along the outside edge (the edge that is not close to the accumulating conveyor belt 62) of the unloading conveyor belt 63. La rear board 67 prevents the fowl from falling off the unloading conveyor belt.

Preferably, the fowl can be unloaded either from the right side or the left side of the vehicle 1. Preferably, the rear board 67 comprises a fixed board and a sliding rear board that runs alongside the fixed rear board. When the unloading conveyor belt 63 is extended towards the cages to carry the fowl to the cages, the sliding rear board is made to slide out so that the unloading conveyor belt 63 is provided with boards for its entire length, including the extended terminal section.

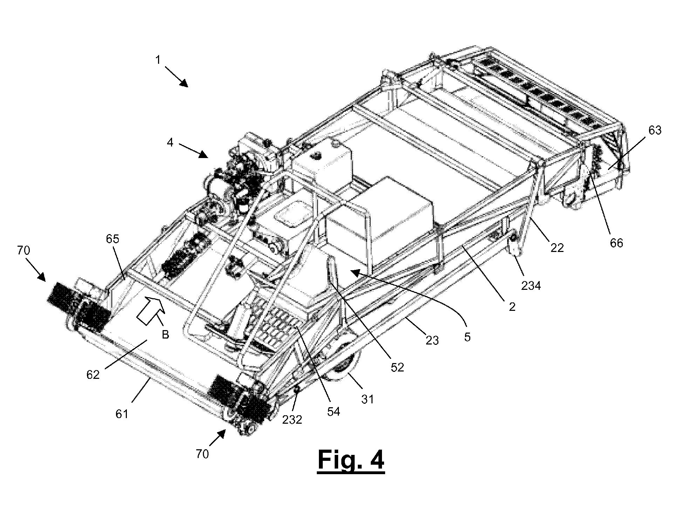

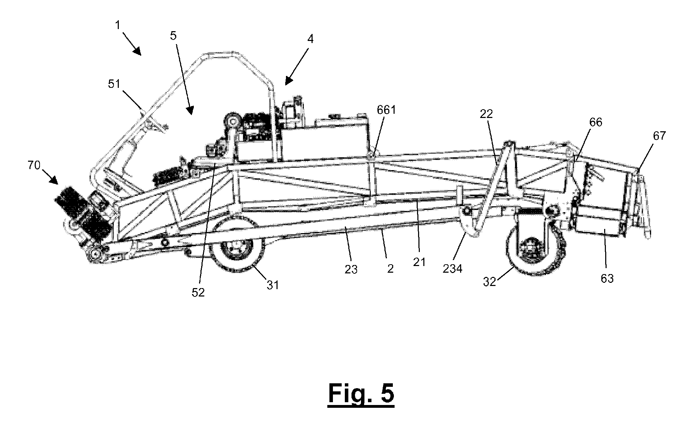

Figures 4 and 5 show the vehicle of Figure 1 in its travelling configuration. The difference from the gathering configuration is that in this configuration the pick-up conveyor belt 61 is no longer turned down to the ground but upwards. This allows to move the vehicle 1 without dragging the gathering conveyor belt on the ground. Furthermore, this configuration can also be used when unloading the fowl. As a matter of fact, in this configuration the raised pick-up conveyor belt 61 acts as a barrier for the fowl, preventing them from escaping from the front of the vehicle 1. The gathering conveyor belt can be retracted or extended by means of one or two hydraulic cylinders 611.

Advantageously, the vehicle 1 according to this invention can also comprise a lifting device that raises the main frame 2 respect to the front wheels 31.

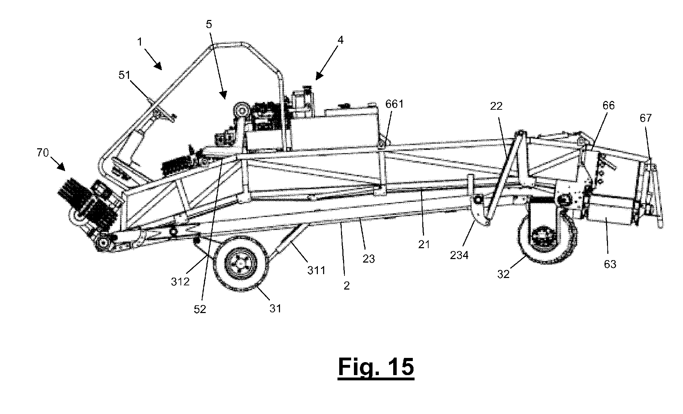

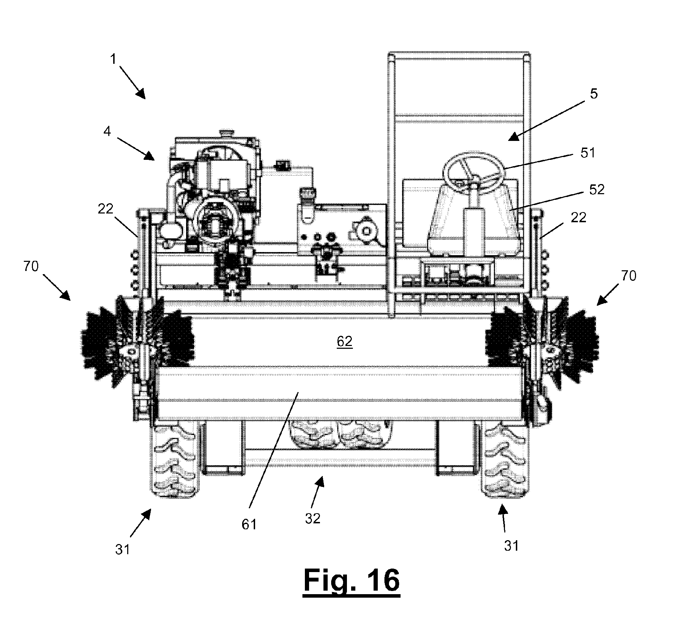

Figures 15 and 16 show the main frame 2 in the raised position. The raised frame configuration is particularly advantageous to increase the angle of approach and allow the vehicle to be loaded on (or unloaded from) a trailer or to allow the vehicle to get over an obstacle such as a step or the shed's threshold more easily.

The main frame lifting device comprises a hydraulic cylinder 311 fastened to the main frame by means of a fastening block. The cylinder 311 is hinged to the main frame 2 at a point behind the front wheel axle 31. The lifting device also comprises a box 312 for housing and protecting the motor that drives the front wheels. The box 312 is also hinged to the main frame 2 but in a position in front of the front wheel axle. When the cylinder 311 is extended, the main frame 2 rises respect to the front wheels 31.

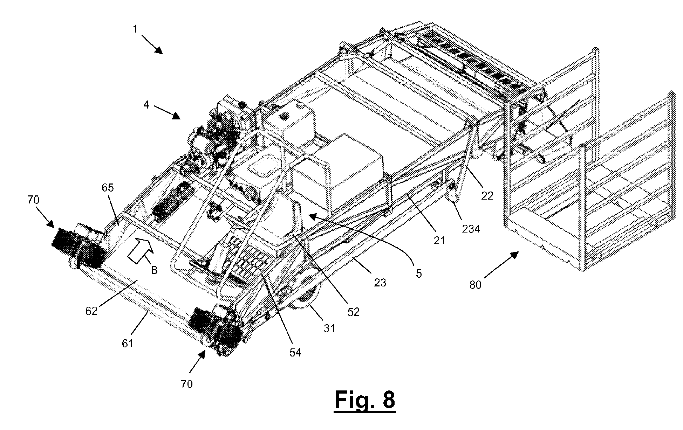

Figure 8 is a axonometric view of the vehicle of Figure 1 in the caging configuration with the unloading conveyor belt 63 lowered on the right side. In this configuration, the gathering conveyor belt 61 is at least partially raised, the barrier 66 between the accumulating conveyor belt 62 and the unloading conveyor belt 63 is open and, preferably, the unloading conveyor belt 63 is extended towards the cages. In this way it is not necessary to come up to the cages. It is sufficient to draw near leaving a space between the cages and the vehicle.

The cages are not shown; for greater clarity only the framework 80 which supports them and allows them to be stacked is shown. Depending on the type of cage, they can be filled starting from the bottom cage, from the top cage or from a cage in an intermediate position in the stack.

After opening the barrier 66, the unloading conveyor belt 63 is turned on to unload the fowl from the accumulating conveyor belt 62 to the unloading conveyor belt 63 and carry them to the cages. At the same time, preferably, the accumulating conveyor belt is also turned on.

As the fowl leave the accumulating conveyor belt 62, the load cells 91, 92 on the accumulating conveyor belt 62 show a lower weight than the weight of the fowl at the end of the gathering phase.

According to an advantageous embodiment of the present invention, the operator is visually and/or acoustically alerted of the change in weight so to have information on the amount of fowl unloaded and hence caged.

It may be convenient to envisage an automatic system that, depending on the weight of the fowl on the accumulating conveyor belt 62, drives the movement of the unloading conveyor belt 63 and/or of the barrier 66 and/or of the accumulating conveyor belt 62.

Preferably, the speed of the unloading conveyor belt is approximately 60 m/min.

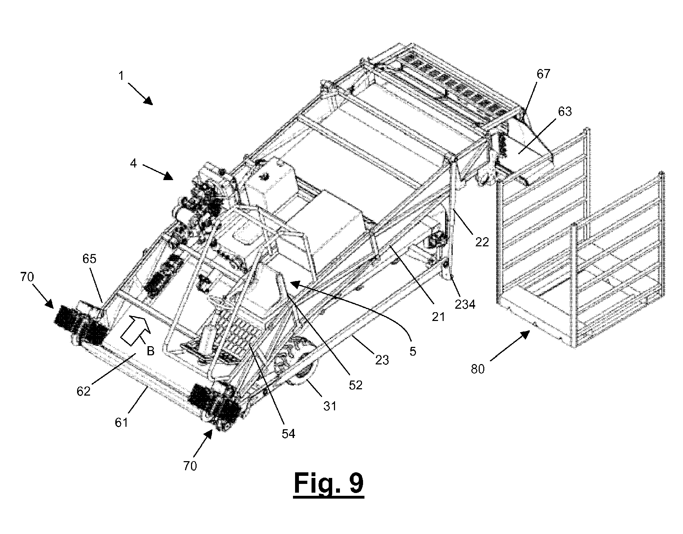

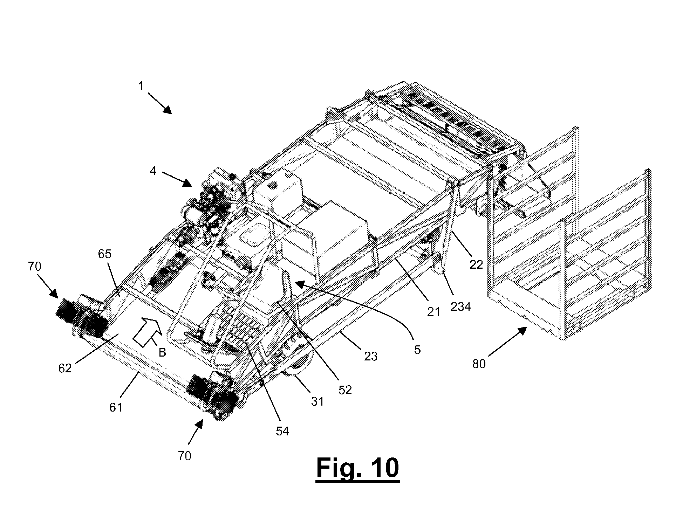

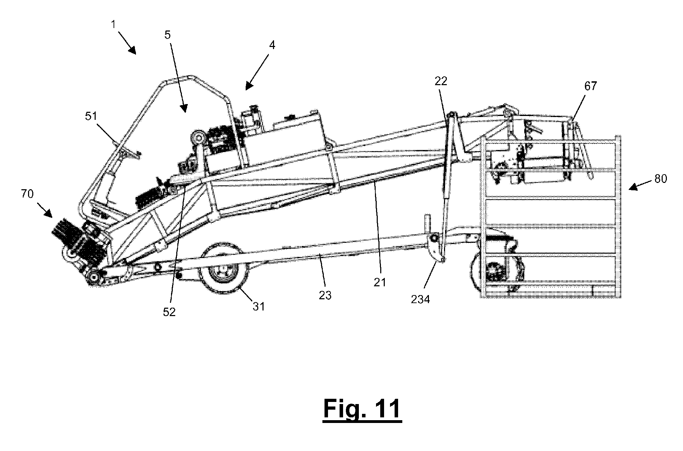

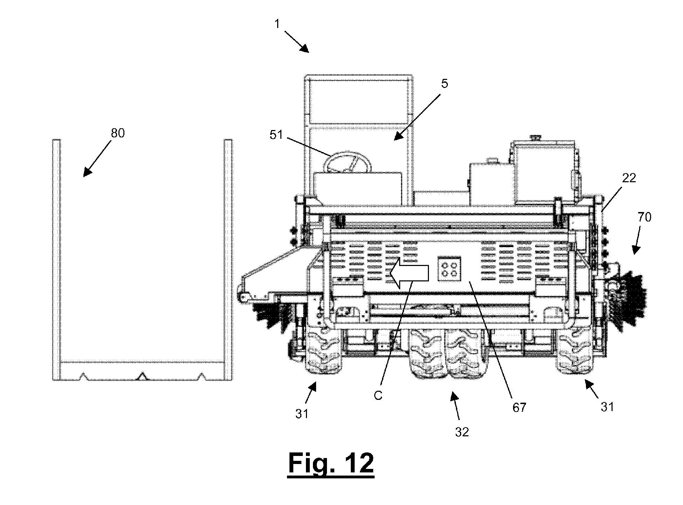

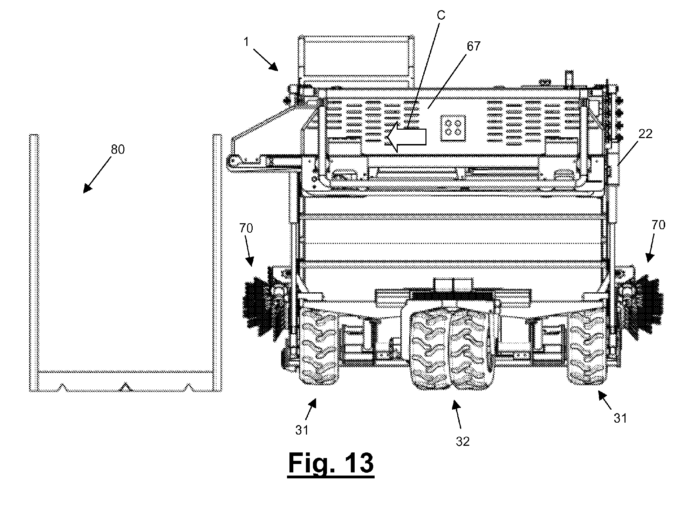

Figure 9 is a axonometric view of the vehicle 1 of Figure 1 in the caging configuration at an intermediate height, right side. Figure 12 is a rear view of the vehicle. In this configuration, the pick-up conveyor belt 61 is at least partially raised, the barrier 66 between the accumulating conveyor belt 62 and the unloading conveyor belt 63 is open and, preferably, the unloading conveyor belt 63 is extended towards the cages. In this position the intermediate cages are being filled. For the rest, the considerations made about loading the fowl in the bottom cage apply (Figure 8). Figures 10, 11 and 13 show the vehicle 1 of Figure 1 in the caging configuration in the raised position on the right side.

Advantageously, the surface of the gathering conveyor belt 61 is "rough", that is, it is provided with raised inserts or studs. Advantageously, the surface of the accumulating conveyor belt 62 is less profiled. One of the reasons for this is that the conveyor belts carry the fowl in a more or less inclined configuration and must provide and adequate grip for the fowl's feet. The unloading conveyor belt 63, on the other hand, runs horizontally and it is not necessary for the belt surface to be rough. Its surface can also be smooth. Advantageously, the conveyor belts are made of PVC or a similar material.

In an embodiment of this invention, at the front of the vehicle there are two sweepers 70 to better convey the fowl towards the pick-up conveyor belt 61.

Although mentioned above when describing the structure of the vehicle 1, the operation of the vehicle in the bird-gathering phase is now described in more detail, followed by the transfer and unloading phase.

The vehicle 1 is brought inside the farm shed and made to move in direction MV (Figure 1) with the pick-up conveyor belt 61 close to the ground. When the vehicle 1 is travelling, both the pick-up conveyor belt 61 and the accumulating belt 62 are running, carrying fowl in the direction of arrows A and B, respectively. The speed of the pick-up conveyor belt 61 may be greater than the speed of the accumulating conveyor belt 62, as repeatedly mentioned above. In this way, the fowl collected from the ground are assembled close to each other on the accumulating belt 62, essentially occupying the entire belt. When the operator, who is placed in the seat 52 and has complete visibility, decides that the vehicle 1 has loaded a sufficient number of fowl, the operator raises the gathering conveyor belt and stops the movement of the accumulating conveyor belt to prevent the fowl from piling up. Alternatively, the end of the gathering phase may be determined by reaching a preset weight of fowl, based on the data produced by the load cells and software program.

With the vehicle loaded with fowl, the operator drives towards the place of unloading, where the cages are usually located. The belts 61, 62 remain preferably still also during the transfer phase. Once arrived in the vicinity of the cages to fill, the operator brings the unloading conveyor belt 63 close to the cage and, when the position is right, opens the barrier 8 and starts, preferably essentially at the same time, the accumulating conveyor belt 62 and the unloading conveyor belt 63. In this way the fowl are carried in the direction of arrow B and then in the transverse direction of arrow C (to the right and/or to the left). Preferably, when the unloading conveyor belt is extended towards a cage, the sliding rear board is made to slide so that the fowl are prevented from falling off the extended unloading conveyor belt. Depending on the height of the cages, the conveyor belt system is rotated upwards. Furthermore, the operator, who is closely following the unloading operations, checks the weight of the fowl remaining on the accumulating conveyor belt 62 (and/or on the unloading conveyor belt) and decides when to stop filling a cage. Stopping the conveyor belts can of course be done automatically (for example based on bird weight data) or manually.

A very advantageous feature of the vehicle relating to the present invention is that the belt-supporting structure 21 supports both the accumulating conveyor belt and the unloading conveyor belt. Therefore, raising the rear part of the structure 21 will also raise the end of the accumulating conveyor belt and the unloading conveyor belt to the level of the cages. The driving seat will also be raised, but, being fixed to the front part of the structure 21, it will raise relatively little above the ground. This allows the vehicle to be easily used inside farm sheds that have relatively low heights. The operator on board the vehicle shall never be in a dangerously high position during unloading operations.

The vehicle relating to the present invention has very compact dimensions. This allows it to be used inside narrow sheds or in sheds with relatively close posts. In one embodiment the vehicle has a wheel base of about 200 cm, a gauge of about 200 cm and a total length of about 350 cm. It has also a rather light weight (about 1400 kg or however between 1000 kg and 2000 kg) which allows it to be used in multi-storey sheds, even with wooden floors.

## Claims

1. A vehicle (1) for gathering fowl from the ground and carrying them to a place of unloading, wherein said vehicle (1) comprises:
a main frame (2);
wheels (31, 32) or tracks to support the main frame (2) above the ground;
an accumulating conveyor belt (62) to carry the fowl in a first direction (B);
an unloading conveyor belt (63) that receives the fowl from the
accumulating conveyor belt (62) and carries the fowl received to a place of unloading, wherein said unloading conveyor belt (63) carries the fowl in a second direction (C), wherein the second direction (C) is at an angle with respect to the first direction (B);
a belt-supporting structure (21) to support said accumulating conveyor
belt (62) and said unloading conveyor belt (63);
a counterframe (23), wherein said belt-supporting structure (21) is at least
partially raisable respect to said counterframe; and
a weighing device (91, 92) placed between said main frame (2) and said
counterframe (23) for weighing the fowl carried on said conveyor belts (62, 63).

2. A vehicle according to claim 1, wherein said weighing device (91, 92) comprises load cells.

3. A vehicle according to claim 2, wherein said weighing device (91, 92) comprises two front load cells and two rear load cells.

4. A vehicle according to claims 2 or 3, wherein said main frame (2) comprises crossbars (24F; 24R) and each of said crossbars comprises an end fastening block (24F1; 24R1) on which to fasten said load cells.

5. A vehicle according to any one of the preceding claims, wherein said belt-supporting structure (21) is pivotally hinged to said counterframe in a front part of the vehicle (1).

6. A vehicle according to claim 5, wherein the vehicle also comprises a lifting device for raising said belt-supporting structure (21) respect to the counterframe (23) at its rear part.

7. A vehicle according to any one of claims 5 or 6, wherein said counterframe comprises two longitudinal crossbars (23) and said belt-supporting structure (21) is pivotally hinged to said longitudinal crossbars at a front part of said longitudinal crossbars.

8. A vehicle according to any one of the preceding claims, wherein said vehicle comprises a barrier (66) between said accumulating conveyor belt (62) and said unloading conveyor belt (63).

9. A vehicle according to any one of the preceding claims, wherein said vehicle comprises a further barrier (661) in an intermediate position of said accumulating conveyor belt (62).

10. A vehicle according to claim 9, wherein said further barrier (661) is operated manually or by weight data on the weight of the fowl accumulated on said second conveyor belt (62), upstream of said further barrier.

11. A vehicle according to any one of the preceding claims, wherein said unloading conveyor belt can be operated to unload fowl from the right side and/or from the left side of the vehicle.

12. A vehicle according to any one of the preceding claims, wherein said vehicle also comprises a pick-up conveyor belt (61) for collecting fowl from the ground and carrying them to the accumulating conveyor belt (62).

13. A vehicle according to any one of the preceding claims, wherein the second direction (C) is substantially perpendicular to the first direction (B).

14. A vehicle according to any one of the preceding claims, wherein said vehicle also comprises a wheel lifting device for raising said wheels or said tracks respect to said main frame (2).

15. A vehicle according to any one of the preceding claims, wherein said vehicle also comprises a driving arrangement (5) fastened to said belt-supporting structure (21) and that can be raised together with it, being there sufficient space for the fowl to pass between said driving arrangement (5) and said accumulating conveyor belt (62).
